# EUROPEAN PATENT SPECIFICATION

(11) **EP 3 096 411 B1**
(45) Date of publication and mention of the grant of the patent: **27.12.2017**
(21) Application number: 16169961.6
(22) Date of filing: 17.05.2016
(51) Int. Cl.: H01R 13/447, H01R 27/00

(54) **CHARGING CONNECTOR CONNECTING DEVICE**
LADESTECKERVERBINDUNGSVORRICHTUNG
DISPOSITIF DE CONNEXION DE CONNECTEUR DE CHARGE

(30) Priority: 20.05.2015 JP 2015102765
(43) Date of publication of application: 23.11.2016
(73) Proprietor: Toyota Jidosha Kabushiki Kaisha, Toyota-shi, Aichi 471-8571 (JP)
(72) Inventor: KANAMORI, Takashi, Toyota-shi, Aichi 471-8571 (JP)
(74) Representative: TBK

(56) References cited:
- DE-A1-102013 108 484
- JP-A- 2013 212 001
- US-A- 5 686 701

## Description

### BACKGROUND OF THE INVENTION

### 1. Field of the Invention

The present invention relates to a charging connector connecting device.

### 2. Description of Related Art

In recent years, a combo system (SAEJ2847/2 or IEC61851-23) has been known as a standard of a quick charge. A DC charging connector of the combo system includes a communication portion and a DC charging terminal portion including a 2-pin terminal for DC charging. Note that the communication portion has the shape same as an AC charging connector (SAEJ1772 or IEC62169-2Type2).

A charging connector connecting device corresponding to the charging connector of the combo system includes a first connecting portion corresponding to the communication portion, and a second connecting portion corresponding to the 2-pin terminal of the DC charging connector.

When the DC charging connector of the combo system is connected to the charging connector connecting device, the communication portion is inserted into the first connecting portion, and the DC charging terminal portion is inserted into the second connecting portion. When an AC connector is connected, the AC connector is inserted into the first connecting portion, and the second connecting portion is exposed.

Generally, in the charging connector connecting device including two connecting portions, various structures to prevent the other connecting portion from being exposed outside when a connector is connected to one connecting portion are proposed.

A charging connector connecting device described in Japanese Patent Application Publication No. 2013-212001 (JP 2013-212001 A) includes: a quick charge connecting portion to which a quick charge connector is connected; a home-use connecting portion to which a normal charge connector is connected; and a connection preventing portion that prevents a connection of the other charging connector when one charging connector is connected.

The connection preventing portion includes: a swinging portion provided on a back-face side of the connecting portion; a first movable portion provided on one end side of the swinging portion and provided on a back-face side of the quick charge connecting portion; and a second movable portion provided on the other end side of the swinging portion and provided on a back-face side of the home-use connecting portion. The first movable portion includes a projecting portion rotatably provided in a tip end of the first movable portion so as to be positioned around the quick charge connecting portion, and a spring that biases the projecting portion so as to be closed.

The second movable portion includes a projecting portion rotatably provided in a tip end of the second movable portion so as to be placed around the home-use connecting portion, and a spring that biases the projecting portion so as to be closed.

When the quick charge connector is connected to the quick charge connecting portion, the quick charge connector pushes the first movable portion, and when the first movable portion is pushed, the swinging portion rotates, so that the second movable portion is pushed up. When the second movable portion is pushed up, the projection portion provided in the tip end of the second movable portion closes an opening of the home-use connecting portion due to a biasing force of the spring.

Similarly, when the normal charge connector is connected to the home-use connecting portion, the normal charge connector pushes the second movable portion. When the second movable portion is pushed, the swinging portion rotates, so that the first movable portion is pushed up. When the first movable portion is pushed up, the projection portion provided in the first movable portion closes the quick charge connecting portion due to a biasing force of the spring.

In the charging connector connecting device described in JP 2013-212001 A, each projecting portion closes each connecting portion due to the biasing force of the spring. On this account, even in a state where the quick charge connector is connected to the quick charge connecting portion so that the home-use connecting portion is closed by the projecting portion, for example, the projecting portion can be opened against the biasing force of the spring.

Further, the inventors have studied a case where the structure described in JP 2013-212001 A is applied to a charging connector connecting device of the combo system.

More specifically, the inventors have studied a case where a first movable portion is placed in a first connecting portion of the charging connector connecting device of the combo system, and a second movable portion is placed in a second connecting portion thereof.

In this case, when an AC charging connector is connected to the first connecting portion of the charging connector connecting device of the combo system, the second connecting portion is closed by a projecting portion. However, even in this case, the projecting portion can be opened against a biasing force of a spring.

Further, when a DC charging connector of the combo system is connected to the charging connector connecting device, a DC charging terminal portion of the DC charging connector pushes the second movable portion, so that the first movable portion is projected more than a first connector. This results in that a communication portion of the DC charging connector cannot be inserted into the first connector.

### SUMMARY OF THE INVENTION

The present invention provides a charging connector connecting device including a first connecting portion and a second connecting portion and configured such that either a first charging connector to be inserted into the first connecting portion or a second charging connector to be inserted into the first connecting portion and the second connecting portion is connected thereto, and the charging connector connecting device is configured such that each of the charging connectors can be successfully connected to the charging connector connecting device, and when the first charging connector is connected, the second connecting portion can be closed successfully.

Further, the present invention provides a charging connector connecting device including a first connecting portion and a second connecting portion, and the charging connector connecting device is configured such that respective charging connectors can be connected to the first connecting portion and the second connecting portion, and when a charging connector is connected to one of the connecting portions, a cover for the other one of the connecting portions can be closed successfully.

A charging connector connecting device according to a first aspect of the present invention includes: a connector connecting portion including a first connecting portion and a second connecting portion, the connector connecting portion being configured such that either a first charging connector to be inserted into the first connecting portion or a second charging connector to be inserted into the first connecting portion and the second connecting portion is connected thereto; a cover provided so as to be movable between a closed position at which the second connecting portion is closed and an open position at which the second connecting portion is opened so that the second charging connector is connectable to the second connecting portion; an elastic member configured to apply a biasing force to the cover so that the cover is positioned at an initial position between the closed position and the open position; and a pressing member configured to move along with insertion of the first charging connector into the connector connecting portion so as to press the cover positioned at the initial position so that the cover is moved to the closed position. When the first charging connector is connected to the first connecting portion, the pressing member supports the cover so that the cover is maintained at the closed position.

According to the charging connector connecting device, when the first charging connector is inserted, the pressing member moves the cover to the closed position. Hereby, when the first charging connector is connected, it is possible to restrain the second connecting portion from being exposed outside. Further, when the second charging connector is inserted, the second charging connector can be connected to the charging connector connecting device by inserting the second charging connector in a state where the cover is positioned at the open position. Further, in a state where the first charging connector is connected to the first connecting portion, the pressing member presses the cover so that the cover is maintained at the closed position. Accordingly, even if an external force is applied to the cover, it is possible to restrain the cover from being opened.

The pressing member that has moved along with insertion of the second charging connector and the cover positioned at the open position may be preferably positioned so as to be distanced from each other.

According to the above configuration, when the second charging connector is inserted, the cover is positioned at the open position. Accordingly, in a case where the second charging connector is inserted, even if the pressing member moves, the pressing member does not make contact with the cover, thereby making it possible to restrain the cover from moving toward the closed position. As a result, it is possible to restrain the cover from interfering with the second charging connector.

The charging connector connecting device may preferably further include: an arm portion provided on a back-face side of the connector connecting portion, the back-face side being on an opposite side to a front-face side thereof into which the first charging connector or the second charging connector is inserted; a support portion configured to support the arm portion so that the arm portion swings; and a projecting portion provided in the arm portion so as to project from the arm portion such that the projection portion projects toward the front-face side from the back-face side of the connector connecting portion. The pressing member may be provided on an opposite side to the projecting portion across the support portion. The projection portion may be provided at a position where the projection portion is pressed by the first charging connector or the second charging connector to be inserted into the connector connecting portion. The arm portion may be configured to rotate when the projection portion is pressed by the first charging connector or the second charging connector, so that the pressing member moves in a direction toward the front-face side from the back-face side. The pressing member may be configured to move in the direction toward the front-face side from the back-face side so as to press the cover positioned at the initial position.

According to the above configuration, the cover positioned at the closed position is supported, via the pressing member, the arm portion, and the projecting portion, by the charging connector inserted into the connector connecting portion. Hereby, even if an external force is applied to the cover positioned at the closed position, it is possible to restrain the cover from being opened as long as the charging connector is inserted into the connector connecting portion.

The cover may be preferably rotatably attached to a lower end side of the second connecting portion, and the cover positioned at the initial position may be in a state where its upper end is distanced from the second connecting portion.

According to the above configuration, an upper end of the cover is opened. Accordingly, when the second charging connector is inserted, a user can easily open the cover.

The cover may preferably include support walls that support side faces of the second charging connector. According to the above configuration, the second charging connector can be easily inserted.

The charging connector connecting device may preferably further include: a detective portion configured to detect that the first charging connector or the second charging connector is inserted into the connector connecting portion; and an actuator configured to move the pressing member. The connector connecting portion may include a front face into which the first charging connector or the second charging connector is inserted, and a back face positioned on an opposite side to the front face. The actuator may be configured to move the pressing member from the back-face side toward the front-face side when the first charging connector or the second charging connector is inserted.

According to the above configuration, a driving force from the actuator is transmitted, via the pressing member, to the cover positioned at the closed position, and even if an external force is applied to the cover positioned at the closed position, it is possible to restrain the cover from being opened.

A charging connector connecting device according to a second aspect of the present invention includes: a connector connecting portion including a first connecting portion to which a first charging connector is connected, and a second connecting portion to which a second charging connector is connected; a second connecting portion cover provided so as to be movable between a closed position at which the second connecting portion is closed and an open position at which the second connecting portion is opened so that the second charging connector is connectable to the second connecting portion; a second cover elastic member configured to apply a biasing force to the second connecting portion cover so that the second connecting portion cover is positioned at an initial position between the closed position and the open position; and a second cover pressing member configured to move along with insertion of the first charging connector into the first connecting portion, so as to press the second connecting portion cover positioned at the initial position so that the second connecting portion cover is moved to the closed position. The second cover pressing member is configured such that, when the first charging connector is connected to the first connecting portion, the second cover pressing member supports the second connecting portion cover so that the second connecting portion cover positioned at the closed position is maintained at the closed position.

According to the above configuration, when the first charging connector is connected to the first connecting portion, the second connecting portion cover closes the second connecting portion. Furthermore, since the second cover pressing member supports the second connecting portion cover positioned at the closed position, even if an external force is applied to the second connecting portion cover, it is possible to restrain the second connecting portion cover from being opened.

The charging connector connecting device may preferably further include: a first connecting portion cover provided so as to be movable between a closed position at which the first connecting portion is closed and an open position at which the first connecting portion is opened so that the first charging connector is connectable to the first connecting portion; a first cover elastic member configured to apply a biasing force to the first connecting portion cover so that the first connecting portion cover is positioned at an initial position between the closed position of the first connecting portion cover and the open position of the first connecting portion cover; and a first cover pressing member configured to move along with insertion of the second charging connector into the second connecting portion, so as to press the first connecting portion cover positioned at the open position of the first connecting portion cover so that the first connecting portion cover is moved to the closed position of the first connecting portion cover. When the second charging connector is connected to the second connecting portion, the first cover pressing member may support the first connecting portion cover so that the first connecting portion cover positioned at the closed position of the first connecting portion cover is maintained at the closed position of the first connecting portion cover.

According to the above configuration, when the second charging connector is connected to the second connecting portion, the first connecting portion cover closes the first connecting portion. Furthermore, since the first cover pressing member supports the first connecting portion cover so as to be positioned at the closed position, even if an external force is applied to the first connecting portion cover, it is possible to restrain the first connecting portion cover from being opened.

According to the charging connector connecting device according to the aspects of the present invention, it is possible to successfully connect the charging connectors to the charging connector connecting device, and when the first charging connector is connected, the second connecting portion can be closed successfully.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a block diagram illustrating a system configuration of a vehicle 1;
FIG. 2 is a side view of the vehicle 1;
FIG. 3 is a perspective view illustrating a charging connector connecting device 20;
FIG. 4 is a front view illustrating a connector connecting portion 35;
FIG. 5 is a side view of a connecting portion 40 without a cover 37 and so on;
FIG. 6 is a side view illustrating an opened/closed state of a cover 36;
FIG. 7 is a perspective view illustrating a DC charging connector 30;
FIG. 8 is a perspective view illustrating an AC charging connector 31;
FIG. 9 is a side view illustrating a state before the AC charging connector 31 is inserted into the charging connector connecting device 20;
FIG. 10 is a side view illustrating a state where the AC charging connector 31 is started to be inserted into the charging connector connecting device 20;
FIG. 11 is a side view illustrating a state where the insertion of the AC charging connector 31 into the charging connector connecting device 20 is completed;
FIG. 12 is a side view illustrating a state before the DC charging connector 30 is inserted into the charging connector connecting device 20;
FIG. 13 is a side view illustrating a state where a cover 36 is started to be opened by the DC charging connector 30;
FIG. 14 is a side view illustrating a state where the cover 36 is opened by the DC charging connector 30;
FIG. 15 is a side view illustrating a state where the DC charging connector 30 is started to be inserted into the connecting portion 40;
FIG. 16 is a side view illustrating a state where the insertion of the DC charging connector 30 into the connecting portion 40 is completed;
FIG. 17 is a perspective view illustrating a modification of the cover 36 that closes a connecting portion 41 of a connector connecting portion 35;
FIG. 18 is a side view schematically illustrating a modification of the connector connecting portion 35;
FIG. 19 is a perspective view illustrating a modification of the DC charging connector 30;
FIG. 20 is a front view illustrating a charging connector connecting device 150;
FIG. 21 is a top view of the charging connector connecting device 150 when viewed from above;
FIG. 22 is a top view of the charging connector connecting device 150 when a cover pressing mechanism 181 is omitted from FIG. 21;
FIG. 23 is a top view illustrating an opened/closed state of each cover;
FIG. 24 is a top view illustrating a state where a cover 170 is opened to an open position 211 by an AC charging connector 175;
FIG. 25 is a top view illustrating a state where the AC charging connector 175 is connected to a connecting portion 153;
FIG. 26 is a top view illustrating a state where a cover 171 is opened to an open position 213 by a DC charging connector 176; and
FIG. 27 is a top view illustrating a state where the DC charging connector 176 is connected to a connecting portion 152.

### DETAILED DESCRIPTION OF EMBODIMENTS

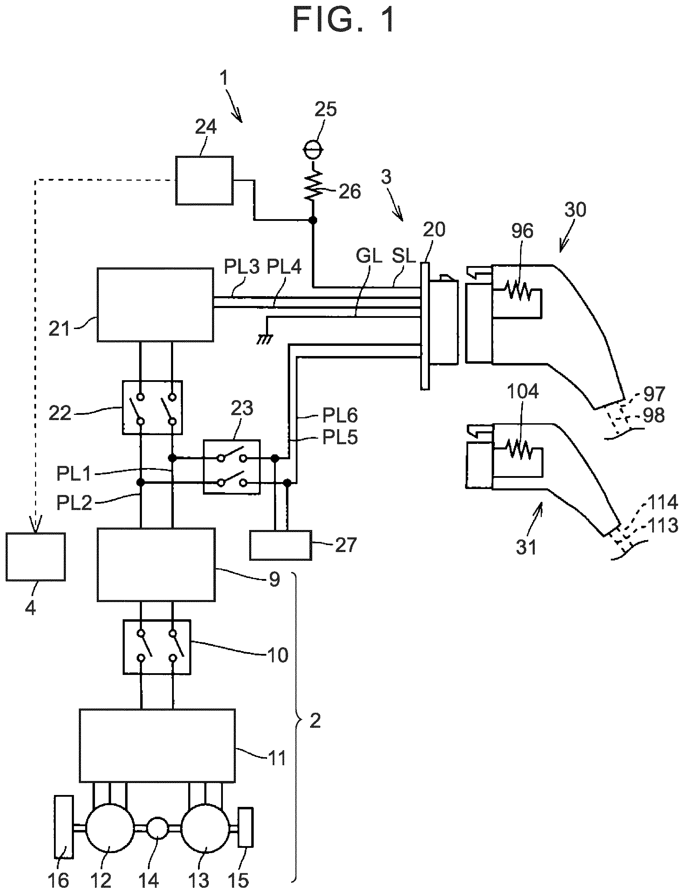

(Embodiment 1) With reference to FIGS. 1 to 19, the following describes a vehicle including a charging connector connecting device according to Embodiment 1.

A vehicle 1 includes: an HV system 2 that generates a driving force for a wheel assembly 16; a charging system 3 that charges a battery 9 with an electric power from outside; and an ECU 4 that controls the HV system 2, the charging system 3, and so on.

The HV system 2 includes a system main relay 10 connected to the battery 9, a PCU (Power Control Unit) 11, a rotary electric machine 12 and a rotary electric machine 13 connected to the PCU 11, a power distribution mechanism 14, and an engine 15.

The charging system 3 includes a charging connector connecting device 20, a charger 21, an AC charging relay 22, a DC charging relay 23, a voltage sensor 24, a pull-up power supply 25, a resistor 26, and a voltage sensor 27. A DC charging connector 30 or an AC charging connector 31 is connected to the charging connector connecting device 20.

The charger 21 is connected to the battery 9 via a power line PL1 and a power line PL2. The AC charging relay 22 is provided in the power lines PL1, PL2. The charger 21 is connected to the charging connector connecting device 20 via a power line PL3 and a power line PL4.

The DC charging relay 23 is provided in power lines PL5, PL6 branched from the power lines PL1, PL2, and the power lines PL5, PL6 are connected to the charging connector connecting device 20. The voltage sensor 27 is connected to the power lines PL5, PL6 placed between the DC charging relay 23 and the charging connector connecting device 20.

A predetermined voltage is applied to the pull-up power supply 25, and the resistor 26 is provided between the charging connector connecting device 20 and the pull-up power supply 25. Note that the pull-up power supply 25 is connected to one end of the resistor 26, and a signal line SL connected to the charging connector connecting device 20 is connected to the other end of the resistor 26. The voltage sensor 24 measures a voltage of the signal line SL between the resistor 26 and the charging connector connecting device 20. Note that a ground line GL is connected to the charging connector connecting device 20.

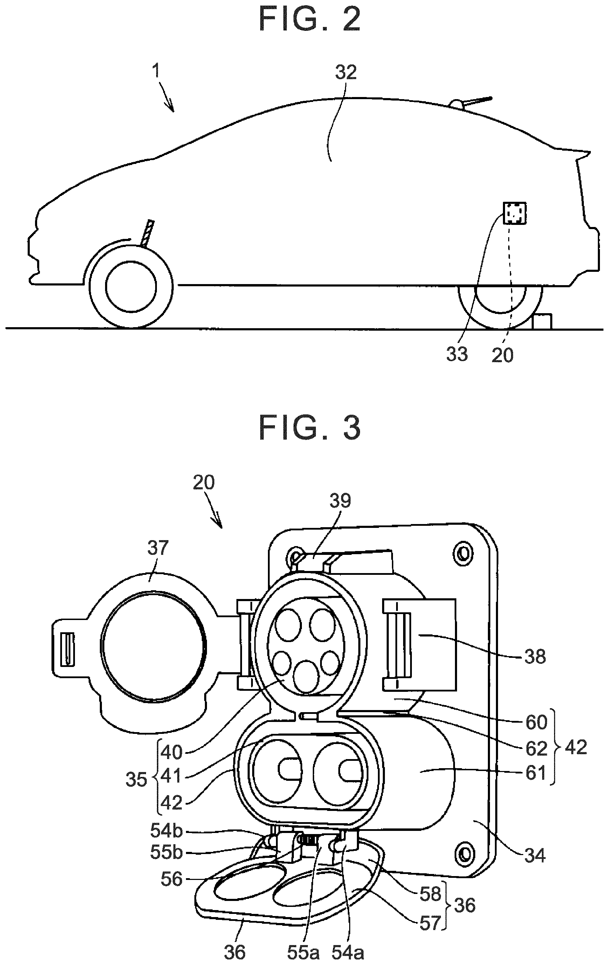

FIG. 2 is a side view of the vehicle 1. As illustrated in FIG. 2, a cover 33 is provided on a side face 32 of the vehicle 1, and when the cover 33 is opened, the charging connector connecting device 20 is opened outside.

FIG. 3 is a perspective view illustrating the charging connector connecting device 20. The charging connector connecting device 20 includes a substrate 34, a connector connecting portion 35 provided so as to project from a front face of the substrate 34, a cover 36, a cover 37, a stopper 38 that locks the cover 37, a stopper 39, and an elastic member 56.

The connector connecting portion 35 includes a connecting portion 40 having a plurality of terminal holes, a connecting portion 41 provided below the connecting portion 40 and having a plurality of terminal holes, and a guide wall 42 provided so as to surround the connecting portion 40 and the connecting portion 41. The stopper 39 is provided in an upper end of the guide wall 42.

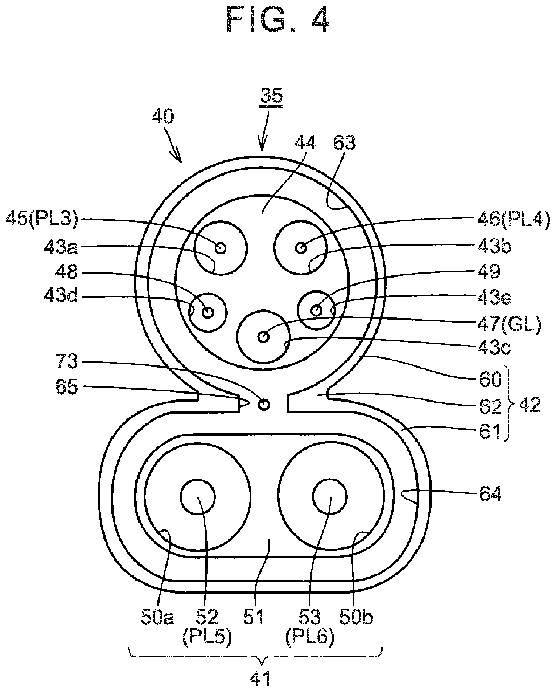

FIG. 4 is a front view illustrating the connector connecting portion 35. The connecting portion 40 includes a columnar body portion 44 having a plurality of terminal holes 43a to 43e, a power terminal 45 provided in the terminal hole 43a, a power terminal 46 provided in the terminal hole 43b, a ground terminal 47 provided in the terminal hole 43c, a signal terminal 48 provided in the terminal hole 43d, and a signal terminal 49 provided in the terminal hole 43e. Note that the power terminal 45 is connected to the power line PL3, and the power terminal 46 is connected to the power line PL4.

The connecting portion 41 is provided below the connecting portion 40. The connecting portion 41 includes a columnar body portion 51 having a plurality of terminal holes 50a, 50b, a power terminal 52 provided in the terminal hole 50a, and a power terminal 53 provided in the terminal hole 50b. Note that the power terminal 52 is connected to the power line PL5, and the power terminal 53 is connected to the power line PL6.

The guide wall 42 includes a wall 60 provided so as to surround the body portion 44 via a space, a wall 61 provided so as to surround the body portion 51 via a space, and a coupling portion 62 that couples the wall 60 with the wall 61.

A groove 63 is formed between the wall 60 and the body portion 44, and a groove 64 is formed between the wall 61 and the body portion 51. The groove 63 and the groove 64 are connected to each other via a coupling groove 65 formed in the coupling portion 62.

In FIG. 3, the cover 36 is provided on a lower end side of the connecting portion 41 and rotatably attached to a lower end of the wall 61. Note that, in a state illustrated in FIG. 3, the cover 36 is positioned at an open position at which the after-mentioned DC charging connector 30 can be connected to the connecting portion 41.

The cover 36 includes a cover main body 57, and a bent portion 58 formed in an end portion of the cover main body 57 so as to be bent with respect to the cover main body 57. The cover main body 57 is provided with projecting portions 55a, 55b, and the projecting portions 55a, 55b are rotatably attached to support portions 54a, 54b formed in a lower end of the wall 61.

The cover main body 57 of the cover 36 can rotate around the support portions 54a, 54b so as to close the connecting portion 41. More specifically, the cover main body 57 of the cover 36 can close an opening of the wall 61, so as to prevent the DC charging connector 30 from being connected to the connecting portion 41.

The elastic member 56 applies a biasing force to the cover 36 so that a posture of the cover 36 is maintained at a predetermined posture. Note that the posture of the cover 36 is described later in detail.

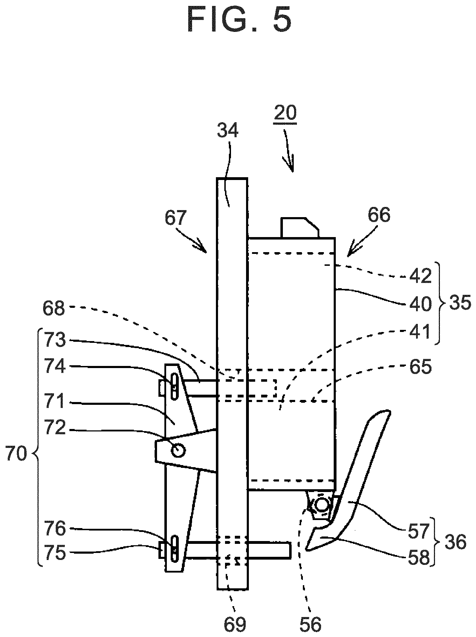

FIG. 5 is a side view of the connecting portion 40 without the cover 37 and so on. As illustrated in FIG. 5, the DC charging connector 30 or the AC charging connector 31 is inserted into the charging connector connecting device 20 from a front-face-66 side of the connector connecting portion 35.

The substrate 34 has a through hole 68 that reaches to a front face from a back face, and a through hole 69 placed below the connector connecting portion 35. The through hole 68 communicates with the coupling groove 65.

The charging connector connecting device 20 includes a cover pressing mechanism 70 provided on a back-face-67 side of the connector connecting portion 35. The cover pressing mechanism 70 includes an arm portion 71 provided on the back-face-67 side, a support member 72 that supports the arm portion 71 in a swinging manner, an ejection pin 73 provided on an upper end side of the arm portion 71, a hinge 74 that attaches the ejection pin 73 to the arm portion 71 in a rotatable manner, a pressing member 75 provided in a lower end of the arm portion 71, and a hinge 76 that supports the pressing member 75 with respect to the arm portion 71 in a rotatable manner. Note that the pressing member 75 is placed on an opposite side to the ejection pin 73 on the basis of the support member 72.

The ejection pin 73 enters the coupling groove 65 via the through hole 68. The pressing member 75 penetrates through the substrate 34 via the through hole 69.

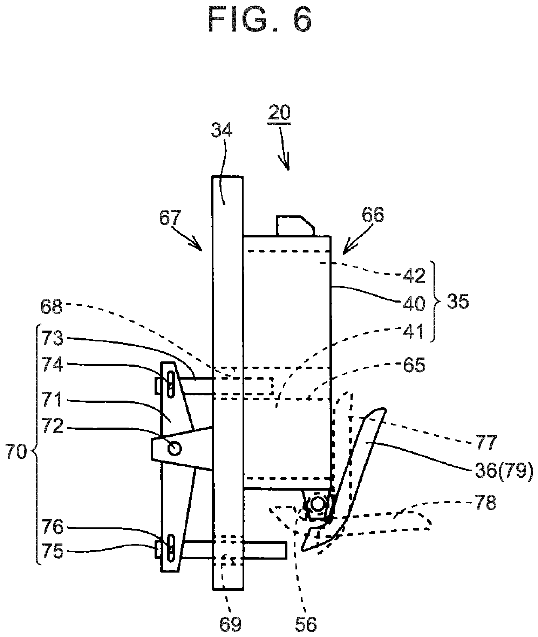

FIG. 6 is a side view illustrating an opened/closed state of the cover 36. In FIG. 6, a reference numeral "77" indicates a closed position at which the cover 36 closes the connecting portion 41. A reference numeral "78" indicates an open position at which the cover 36 opens the connecting portion 41 to the outside. A reference numeral "79" indicates an initial position at which the cover 36 is positioned at the time when no external force, except a biasing force from the elastic member 56, is applied to the cover 36.

Thus, the cover 36 is provided movably between the closed position 77 and the open position 78, and the initial position 79 of the cover 36 is positioned between the closed position 77 and the open position 78. Note that, in an example illustrated in FIG. 6, the initial position 79 is a position closer to the closed position 77 than the open position 78. Since the cover 36 is supported on the lower end side of the connecting portion 41, when the cover 36 is positioned at the initial position 79, an upper end side of the cover 36 is distanced from the connecting portion 41. Note that, at the time when no external force, except a biasing force from the elastic member 56, is applied to the cover 36, the elastic member 56 applies the biasing force to the cover 36 so that the cover 36 is positioned at the initial position 79.

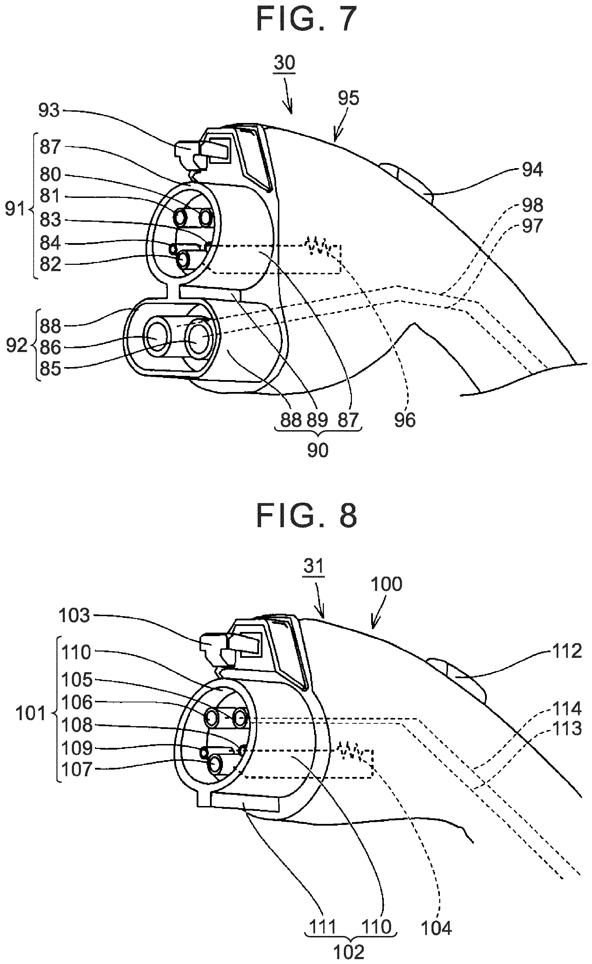

FIG. 7 is a perspective view illustrating the DC charging connector 30. As illustrated in FIG. 7, the DC charging connector 30 includes a connector case 95, a guide wall 90 provided in a tip end of the connector case 95, a connecting portion 91, a connecting portion 92, a claw portion 93, an operating portion 94 provided on a top face of the connector case 95, and a resistor 96 provided inside the connector case 95.

The operating portion 94 is a member operated by a user. When the operating portion 94 is pushed by the user, for example, the claw portion 93 jumps up, so that the claw portion 93 can be hooked on the stopper 39 illustrated in FIG. 3.

The guide wall 90 includes a tubular portion 87 that surrounds a plurality of terminals, a tubular portion 88 that surrounds a plurality of terminals, and a coupling portion 89 that couples the tubular portion 87 with the tubular portion 88. The connecting portion 91 includes the tubular portion 87 that is opened forward, and a terminal 80, a terminal 81, an earth terminal 82, a signal terminal 83, and a signal terminal 84 provided inside the tubular portion 87. One end of the resistor 96 is connected to the earth terminal 82, and the other end of the resistor 96 is connected to the signal terminal 84.

The connecting portion 92 includes the tubular portion 88 that is opened forward, and a DC power terminal 85 and a DC power terminal 86 provided inside the tubular portion 88. A power line 97 is connected to the DC power terminal 85, and a power line 98 is connected to the DC power terminal 86. Note that the power lines 97, 98 are connected to a DC power supply.

When the DC charging connector 30 is connected to the connector connecting portion 35 illustrated in FIGS. 3 and 4, the connecting portion 91 is connected to the connecting portion 40, and the connecting portion 92 is connected to the connecting portion 41.

When the connecting portion 91 is connected to the connecting portion 40, the terminal 80 is connected to the power terminal 45 and the terminal 81 is connected to the power terminal 46. The earth terminal 82 is connected to the ground terminal 47. The signal terminal 83 is connected to the signal terminal 48, and the signal terminal 84 is connected to the signal terminal 49.

When the signal terminal 84 is connected to the signal terminal 49 and the earth terminal 82 is connected to the ground terminal 47, one end of the resistor 96 is connected to the ground line GL, and the other end of the resistor 96 is connected to the signal line SL in FIG. 1.

In FIG. 7, when the connecting portion 92 is connected to the connecting portion 41 illustrated in FIG. 4, the DC power terminal 85 is connected to the power terminal 52, and the DC power terminal 86 is connected to the power terminal 53. Hereby, in FIG. 1, the power line 97 is connected to the power line PL5, and the power line 98 is connected to the power line PL6.

Further, when the DC charging connector 30 illustrated in FIG. 7 is connected to the connector connecting portion 35 illustrated in FIG. 4, the tubular portion 87 enters the groove 63, and the tubular portion 88 enters the groove 64. Then, the coupling portion 89 enters the coupling groove 65. When the coupling portion 89 enters the coupling groove 65, the ejection pin 73 positioned inside the coupling groove 65 is pressed by the coupling portion 89.

FIG. 8 is a perspective view illustrating the AC charging connector 31. As illustrated in FIG. 8, the charging connector connecting device 20 includes a case main body 100, a connecting portion 101 provided on a tip end surface of the case main body 100, a guide wall 102, a claw portion 103, an operating portion 112 provided on a top face of the case main body 100, and a resistor 104 provided in the case main body 100.

The guide wall 102 includes a tubular portion 110 that surrounds a plurality of terminals and is opened forward, and a protruding portion 111 provided in a lower end of the tubular portion 110.

The connecting portion 101 includes the tubular portion 110, an AC power terminal 105, an AC power terminal 106, an earth terminal 107, a signal terminal 108, and a signal terminal 109 provided inside the tubular portion 110.

One end of the resistor 104 is connected to the earth terminal 107, and the other end of the resistor 104 is connected to the signal terminal 109. A power line 113 is connected to the AC power terminal 105, and a power line 114 is connected to the AC power terminal 106.

When the AC charging connector 31 is connected to the connecting portion 40 illustrated in FIGS. 3 and 4, the AC power terminal 105 is connected to the power terminal 45, and the AC power terminal 106 is connected to the power terminal 46. The earth terminal 107 is connected to the ground terminal 47. The signal terminal 108 is connected to the signal terminal 48, and the signal terminal 109 is connected to the signal terminal 49.

When the earth terminal 107 is connected to the ground terminal 47 and the signal terminal 109 is connected to the signal terminal 49, one end of the resistor 104 is connected to the signal line SL and the other end of the resistor 104 is connected to the ground line GL in FIG. 1.

When the AC power terminal 105 is connected to the power terminal 45 and the AC power terminal 106 is connected to the power terminal 46, the power line 113 is connected to the power line PL3, and the power line 114 is connected to the power line PL4.

Further, when the connecting portion 101 is connected to the connecting portion 40, the tubular portion 110 is inserted into the groove 63, and the protruding portion 111 is inserted into the coupling groove 65. Hereby, the ejection pin 73 positioned inside the coupling groove 65 is pressed by the protruding portion 111.

Note that the AC charging connector 31 does not include a member to be connected to the connecting portion 41 illustrated in FIGS. 4 and 3.

When the AC charging connector 31 is connected to the charging connector connecting device 20, the connecting portion 41 is exposed outside. If both electrodes of the DC charging relay 23 are welded, a voltage is applied to the power terminal 52 and the power terminal 53.

In view of this, in the vehicle 1 (the charging connector connecting device 20) according to the present embodiment, in a case where the AC charging connector 31 is connected to the charging connector connecting device 20, the connecting portion 41 is closed by the cover 36. Further, even if an external force is applied to the cover 36 by an erroneous operation of the user in a state where the cover 36 is closed, the cover 36 is restrained from being opened. Further, when the DC charging connector 30 is connected to the charging connector connecting device 20, the cover 36 can be positioned at the open position, so that the DC charging connector 30 can be connected well.

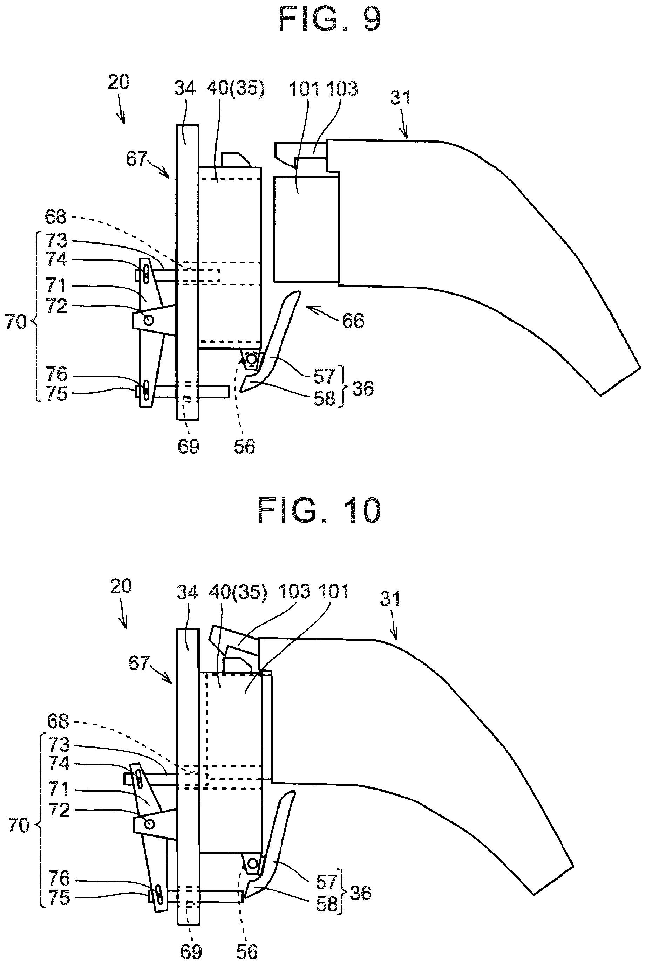

Next will be described operations and effects of the charging connector connecting device 20 in detail with reference to FIG. 9 and so on.

FIGS. 9 to 11 illustrate an operation procedure at the time when the AC charging connector 31 is connected to the charging connector connecting device 20. In a state illustrated in FIG. 9, the cover 37 illustrated in FIG. 3 is opened, and the connecting portion 101 of the AC charging connector 31 is distanced from the connecting portion 40.

Accordingly, the ejection pin 73 is not pressed by the connecting portion 101, and no external force, except the biasing force from elastic member 56, is applied to the cover 36.

Subsequently, as illustrated in FIG. 10, when the connecting portion 101 is partially inserted into the connector connecting portion 35, the connecting portion 101 starts to press the ejection pin 73. Along with the insertion of the connecting portion 101, the ejection pin 73 moves in a direction toward the back-face-67 side from the front-face-66 side.

When the ejection pin 73 moves as described above, the arm portion 71 rotates around the support member 72. When the arm portion 71 rotates, the upper end of the arm portion 71 is separated from the substrate 34, and the lower end of the arm portion 71 approaches the substrate 34.

When the lower end of the arm portion 71 approaches the substrate 34, the pressing member 75 attached to the lower end side of the arm portion 71 moves in a direction toward the front-face-66 side from the back-face-67 side of the connector connecting portion 35.

When the pressing member 75 moves as described above, the tip end of the pressing member 75 approaches an end portion of the bent portion 58 of the cover 36.

When an insertion length of the connecting portion 101 reaches a predetermined length, the tip end of the pressing member 75 makes contact with the end portion of the bent portion 58.

When the connecting portion 101 is further inserted, the pressing member 75 presses the cover 36 along with the insertion, so that the cover 36 rotates. Hereby, the cover 36 illustrated in FIG. 10 rotates to the closed position from the initial position 79 illustrated in FIG. 9.

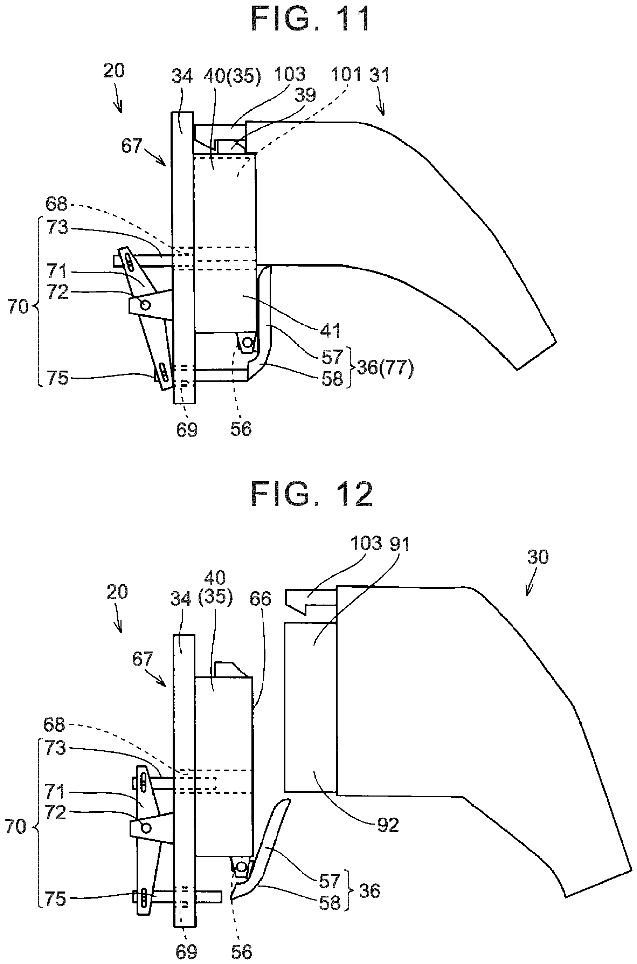

FIG. 11 illustrates a state where the insertion of the AC charging connector 31 into the charging connector connecting device 20 is completed and the AC charging connector 31 is connected to the connecting portion 40. As illustrated in FIG. 11, in a state where the AC charging connector 31 is connected to the connecting portion 40, the claw portion 103 is locked by the stopper 39. In a state where the AC charging connector 31 is connected to the connecting portion 40 as such, even if an external force is applied to the AC charging connector 31, the AC charging connector 31 is restrained from being removed from the connecting portion 40. In a state where the AC charging connector 31 is connected to the connecting portion 40, the cover 36 is positioned at the closed position 77, so that the connecting portion 41 is closed by the cover 36.

Here, in the state illustrated in FIG. 11, the cover 36 is pressed by the pressing member 75, and the pressing member 75 is supported by the AC charging connector 31 through the arm portion 71 and the ejection pin 73. On this account, as long as the AC charging connector 31 is connected to the connecting portion 40, even if an external force is applied to the cover 36, it is possible to restrain the cover 36 from being opened.

Particularly, in an example illustrated in FIG. 11, in a state where the insertion of the connecting portion 101 is completed, the claw portion 103 engages with the stopper 39. On this account, even if an external force is applied to the cover 36 in the state illustrated in FIG. 11, the connecting portion 101 is restrained from moving, thereby making it possible to restrain the cover 36 from being opened.

Hereby, in a course where the user connects the AC charging connector 31 to the charging connector connecting device 20, the cover 36 closes the connecting portion 41, thereby making it possible to restrain a hand or the like of the user from touching the connecting portion 41.

Here, in FIG. 1, when the AC charging connector 31 is connected to the charging connector connecting device 20, the resistor 104 is connected to the signal line SL and the ground line GL. A predetermined voltage is applied to the pull-up power supply 25, and when the resistor 104 is connected as such, a voltage detected by the voltage sensor 24 fluctuates.

Further, a resistance value of the resistor 104 is different from a resistance value of the resistor 96, and a voltage value detected by the voltage sensor 24 at the time when the DC charging connector 30 is connected is different from a voltage value detected by the voltage sensor 24 at the time when the AC charging connector 31 is connected. Hereby, the ECU 4 can detect whether the DC charging connector 30 is connected to the charging connector connecting device 20 or the AC charging connector 31 is connected thereto.

The ECU 4 performs welding check on the AC charging relay 22 in a state where the AC charging connector 31 is connected to the charging connector connecting device 20.

At this time, if both electrodes of the DC charging relay 23 are welded, a voltage from the battery 9 is applied to the power terminals 52, 53 illustrated in FIG. 4. However, as illustrated in FIG. 11, the cover 36 closes the connecting portion 41, so that the power terminals 52, 53 to which the voltage is being applied are restrained from being exposed outside.

Next will be described a case where the DC charging connector 30 is connected to the connector connecting portion 35 with the use of FIG. 12.

In a state illustrated in FIG. 12, the connecting portions 91, 92 of the DC charging connector 30 are distanced from the connector connecting portion 35. Accordingly, the cover 36 is positioned at the initial position 79. Because of this, the upper end of the cover 36 is distanced from the front face 66 of the connector connecting portion 35.

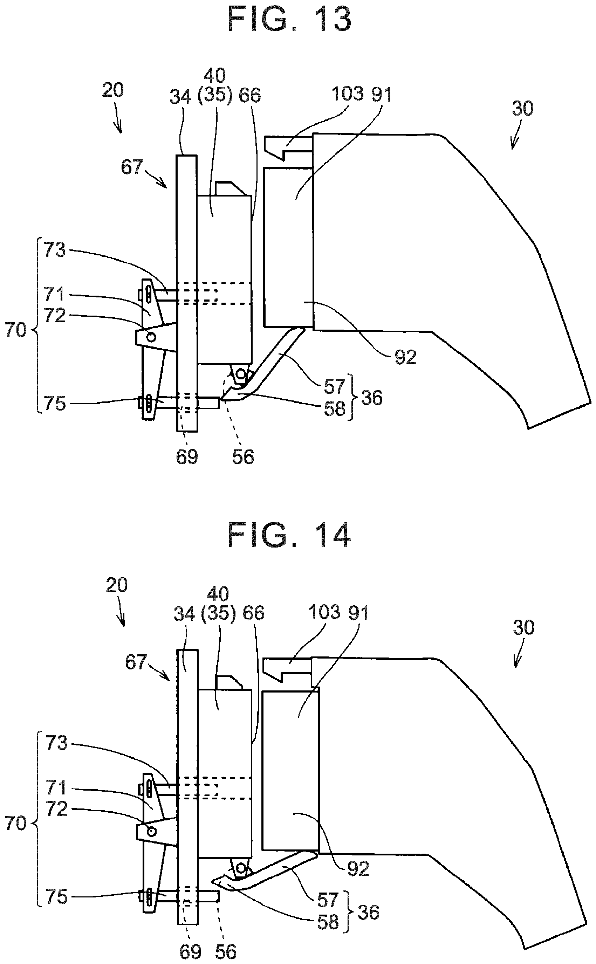

In the consideration of FIG. 13, the user presses the cover 36 downward with the DC charging connector 30. Since the cover 36 is pressed by the DC charging connector 30, the cover 36 slightly rotates toward the open position 78 from the initial position 79.

In the consideration of FIG. 14, the user further moves the DC charging connector 30 downward from the state illustrated in FIG. 13, so that the cover 36 rotates toward the open position 78.

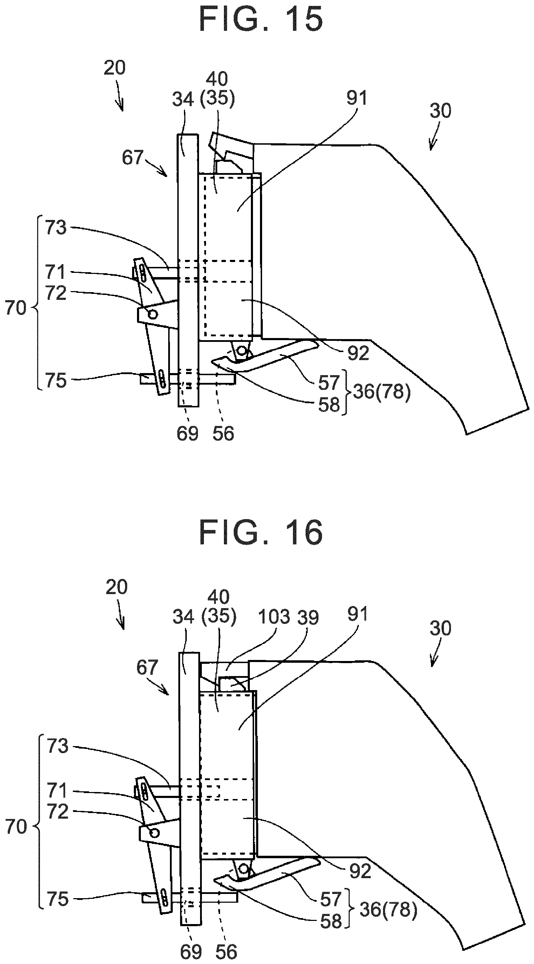

In the consideration of FIG. 15, the cover 36 is positioned at the open position 78. Then, the user inserts the connecting portion 91 into the connecting portion 40 and inserts the connecting portion 92 into the connecting portion 41. Hereby, the ejection pin 73 moves toward the back-face-67 side from the front-face-66 side.

When the ejection pin 73 moves as described above, the arm portion 71 rotates. The upper end of the arm portion 71 moves so as to be separated from the substrate 34, and the lower end of the arm portion 71 moves so as to approach the substrate 34. Hereby, the pressing member 75 moves in a direction toward the front-face-66 side from the back-face-67 side.

Here, the cover 36 positioned at the open position 78 and the pressing member 75 that has moved to the front-face-66 side are distanced from each other. That is, even if the DC charging connector 30 is connected to the connecting portion 40 and the connecting portion 41, since the cover 36 is positioned at the open position 78 in advance, the cover 36 is never pressed by the pressing member 75. As a result, even if the DC charging connector 30 is connected to the connector connecting portion 35, such a situation is restrained that the cover 36 rotates toward the closed position 77 and the cover 36 and the DC charging connector 30 interfere with each other.

As illustrated in FIG. 16, the connecting portion 91 is connected to the connecting portion 40, and the connecting portion 92 is connected to the connecting portion 41. Here, in a state where the DC charging connector 30 is connected to the connecting portion 40 and the connecting portion 41, the claw portion 103 is locked by the stopper 39. In a state where the DC charging connector 30 is connected to the connecting portion 40 as such, even if an external force is applied to the DC charging connector 30, the DC charging connector 30 is restrained from being removed from the connecting portion 40.

In FIG. 1, when the DC charging connector 30 is connected to the charging connector connecting device 20, the resistor 96 is connected to the signal line SL and the ground line GL. When the resistor 96 is connected, a voltage of the signal line SL changes, so that the voltage sensor 24 detects the voltage of the signal line SL after the resistor 96 is connected. The ECU 4 detects, based on a voltage value detected by the voltage sensor 24, that the DC charging connector 30 is connected to the charging connector connecting device 20.

When it is determined that the DC charging connector 30 is connected, the ECU 4 turns on the DC charging relay 23. After that, a direct-current power is supplied from the DC charging connector 30, and an electric power is supplied to the battery 9.

For example, after charging is completed, the ECU 4 performs welding check on the DC charging relay 23 in a state where the DC charging connector 30 is connected. At this time, the connecting portion 40 of the charging connector connecting device 20 is closed by the connecting portion 91 of the DC charging connector 30 and the connecting portion 92 is closed by the connecting portion 41. Thus, the connecting portions 40, 41 are restrained from being exposed outside during the welding check.

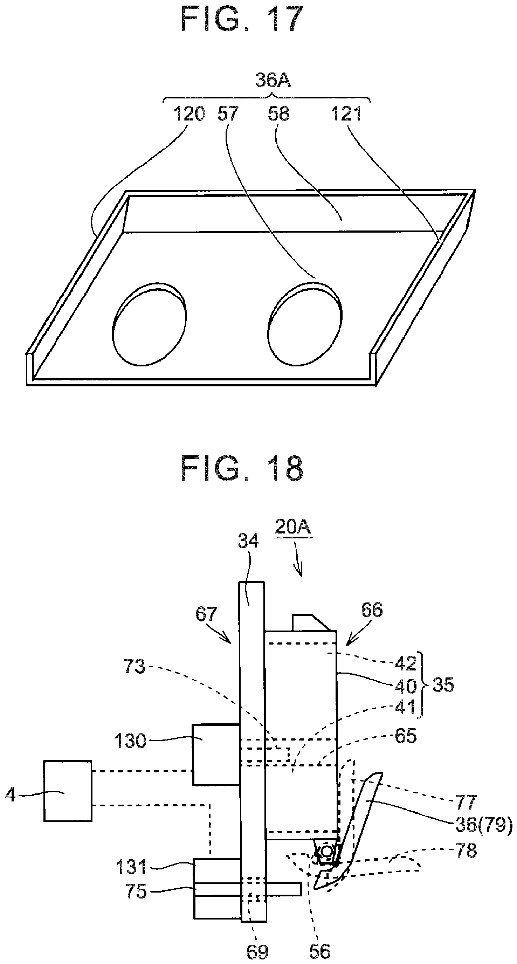

FIG. 17 is a perspective view illustrating a modification of the cover 36 that closes the connecting portion 41 of the connector connecting portion 35. As illustrated in FIG. 17, the cover 36 includes a cover main body 57, a bent portion 58, and support walls 120, 121.

The support wall 120 is formed in one lateral side portion of the cover main body 57, and the support wall 121 is formed in the other lateral side portion of the cover main body 57. As illustrated in FIGS. 14 to 16, at the time when the DC charging connector 30 is placed on the cover 36, the support wall 120 and the support wall 121 support side faces of the DC charging connector 30. This makes it easy to perform positioning at the time when the DC charging connector 30 is inserted into the connector connecting portion 35.

FIG. 18 is a side view schematically illustrating a modification of the connector connecting portion 35. Note that, in FIG. 18, the same constituent as a constituent illustrated in FIG. 5 has the same reference numeral as the constituent in FIG. 5, and its description may be omitted.

A charging connector connecting device 20A illustrated in FIG. 18 includes an ejection pin 73 provided inside a coupling groove 65, a detective sensor 130 that detects a movement of the ejection pin 73 while permitting the movement of the ejection pin 73, and an actuator 131 that moves a pressing member 75.

The detective sensor 130 and the actuator 131 are placed on a back-face-67 side of a connector connecting portion 35.

In the charging connector connecting device 20A, when the DC charging connector 30 or the AC charging connector 31 is inserted into the connector connecting portion 35, the ejection pin 73 moves toward the back-face-67 side from a front-face-66 side. The detective sensor 130 detects a movement of the ejection pin 73. When the movement of the ejection pin 73 is detected, an ECU 4 drives the actuator 131.

The actuator 131 moves the pressing member 75 so that the pressing member 75 moves toward the front-face-66 side from the back-face-67 side. At this time, in a case where the AC charging connector 31 is connected to the connector connecting portion 35, the pressing member 75 presses a cover 36 so that the cover 36 moves to a closed position.

Even in the charging connector connecting device 20A, the actuator 131 supports the pressing member 75, and the cover 36 is supported by the pressing member 75. Hereby, even if an external force is applied to the cover 36 positioned at the closed position 77, it is possible to restrain the cover 36 from being opened.

In the meantime, in a case where the DC charging connector 30 is connected to the connector connecting portion 35, the cover 36 is positioned at an open position 78. Accordingly, even if the cover 36 moves, the DC charging connector 30 does not make contact with the cover 36.

Note that, according to the connector connecting portion 35, the DC charging connector 30, and the AC charging connector 31 of the above embodiment, the pressing member 75 is configured to move in either of the cases where the DC charging connector 30 is connected to the connector connecting portion 35 and where the AC charging connector 31 is connected thereto. However, such a configuration is not a necessary configuration, and the pressing member 75 may be moved only in a case where the DC charging connector 30 is connected.

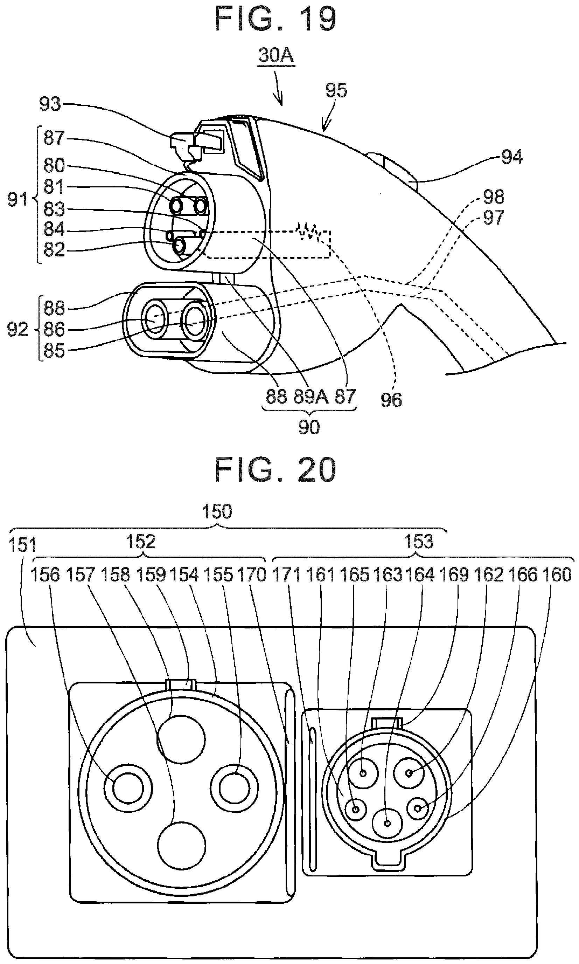

For example, in a DC charging connector 30A illustrated in FIG. 19, a length of a coupling portion 89A is formed to be shorter than a length of the protruding portion 111 illustrated in FIG. 8.

When the DC charging connector 30A is connected to the charging connector connecting device 20 illustrated in FIG. 5, the coupling portion 89A does not press the ejection pin 73. Because of this, the pressing member 75 does not move when the DC charging connector 30A is connected. In the meantime, when the AC charging connector 31 is connected to the charging connector connecting device 20, the pressing member 75 moves. Thus, the cover 36 moves to the closed position 77.

As such, the pressing member 75 may be moved only when the AC charging connector 31 is connected to the charging connector connecting device 20. (Embodiment 2) With reference to FIGS. 20 to 27, the following describes a charging connector connecting device 150 according to Embodiment 2.

FIG. 20 is a front view illustrating the charging connector connecting device 150. As illustrated in FIG. 20, the charging connector connecting device 150 includes a substrate 151, a connecting portion 152 provided on a front face of the substrate 151, and a connecting portion 153 provided on the front face of the substrate 151 via a space from the connecting portion 152. A DC charging connector is connected to the connecting portion 152, and an AC charging connector is connected to the connecting portion 153. Note that, in an example illustrated in FIG. 20, a DC charging connector of a CHAdeMO system is connected to the connecting portion 152.

The connecting portion 152 includes: a guide wall 154 formed in a tubular shape; power terminals 155, 156 provided inside the guide wall 154; communication terminals 157, 158 provided inside the guide wall 154; a stopper 159 provided in an upper end of the guide wall 154; and a cover 170 provided on a side face of the guide wall 154 in a rotatable manner.

The connecting portion 153 includes: a guide wall 160 formed in a tubular shape; a body portion 161 placed inside the guide wall 160 and having a plurality of terminal holes; power terminals 162, 163 provided in the terminal holes of the body portion 161; a ground terminal 164 provided in the terminal hole of the body portion 161; signal terminals 165, 166 provided in the terminal holes of the body portion 161; a stopper 169 provided in an upper end of the guide wall 160; and a cover 171 provided on a side face of the guide wall 160 in a rotatable manner.

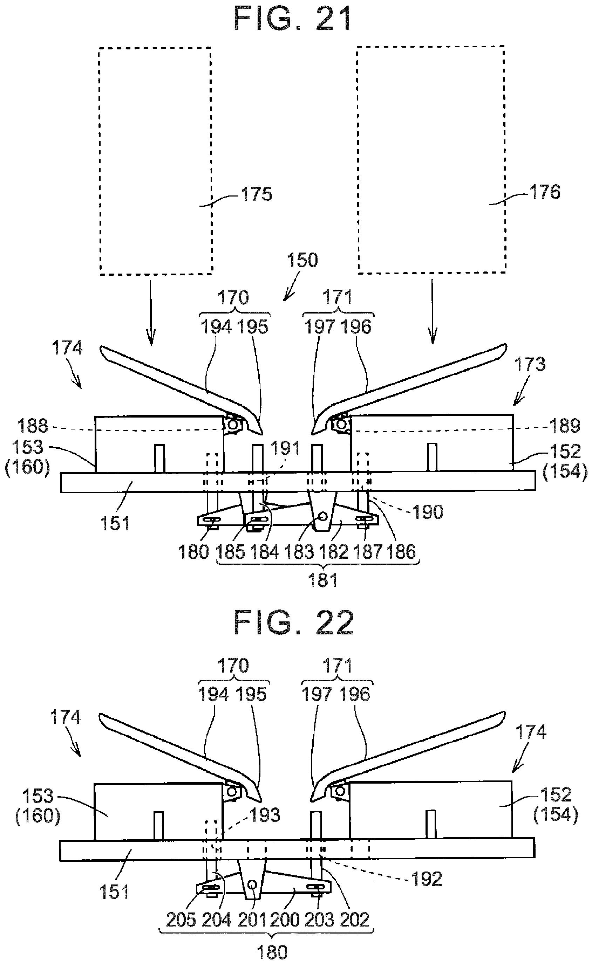

FIG. 21 is a top view of the charging connector connecting device 150 when viewed from above. With reference to FIG. 21, a DC charging connector 176 is connected from a front-face-173 side of the connecting portion 152, and an AC charging connector 175 is connected from a front-face-174 side of the connecting portion 153.

The charging connector connecting device 150 includes an elastic member 188 provided in the cover 170, an elastic member 189 provided in the cover 171, a cover pressing mechanism 180 that presses the cover 170 provided in the connecting portion 153, and a cover pressing mechanism 181 that presses the cover 171 provided in the connecting portion 152. The cover pressing mechanism 180 and the cover pressing mechanism 181 are provided on respective back-face sides of the connecting portions 153, 152.

The cover pressing mechanism 180 and the cover pressing mechanism 181 are provided so as to be superimposed on top of each other in an up-down direction, and the cover pressing mechanism 181 is provided above the cover pressing mechanism 180.

The cover pressing mechanism 181 includes: an arm portion 182 provided on a back face side of the substrate 151; a support member 183 attached to the substrate 151 so that the arm portion 182 can swing; an ejection pin 186 provided in one end of the arm portion 182; a hinge 187 that attaches the ejection pin 186 to one end of the arm portion 182; a pressing member 184 provided in the other end of the arm portion 182; and a hinge 185 that attaches the pressing member 184 to the other end of the arm portion 182.

The ejection pin 186 passes through a through hole 190 formed in the substrate 151 so as to project inside the guide wall 154. The pressing member 184 passes through a through hole 191 formed in the substrate 151 so as to project from the front face of the substrate 151.

The cover 170 is provided on the side face of the guide wall 160 in a rotatable manner, and the cover 170 includes a cover main body 194, and a bent portion 195 provided in one end of the cover main body 194 so as to bend from the cover main body 194. The pressing member 184 of the cover pressing mechanism 181 is provided near the bent portion 195.

FIG. 22 is a top view of the charging connector connecting device 150 when the cover pressing mechanism 181 is omitted from FIG. 21. As illustrated in FIG. 22, the cover pressing mechanism 180 includes: an arm 200 provided on the back-face side of the substrate 151; a support member 201 attached to the substrate 151 so that the arm 200 can swing; a pressing member 202 provided in one end of the arm 200; a hinge 203 that attaches the pressing member 202 to the one end of the arm 200; an ejection pin 204 provided in the other end of the arm 200; and a hinge 205 that attaches the ejection pin 204 to the other end of the arm 200.

The pressing member 202 is provided so as to pass through a through hole 192 formed in the substrate 151 and project from the front face of the substrate 151. The ejection pin 204 is provided so as to pass through a through hole 193 formed in the substrate 151 and project inside the guide wall 160.

The cover 171 includes a cover main body 196, and a bent portion 197 formed in an end portion of the cover main body 196 so as to bend from the end portion of the cover main body 196.

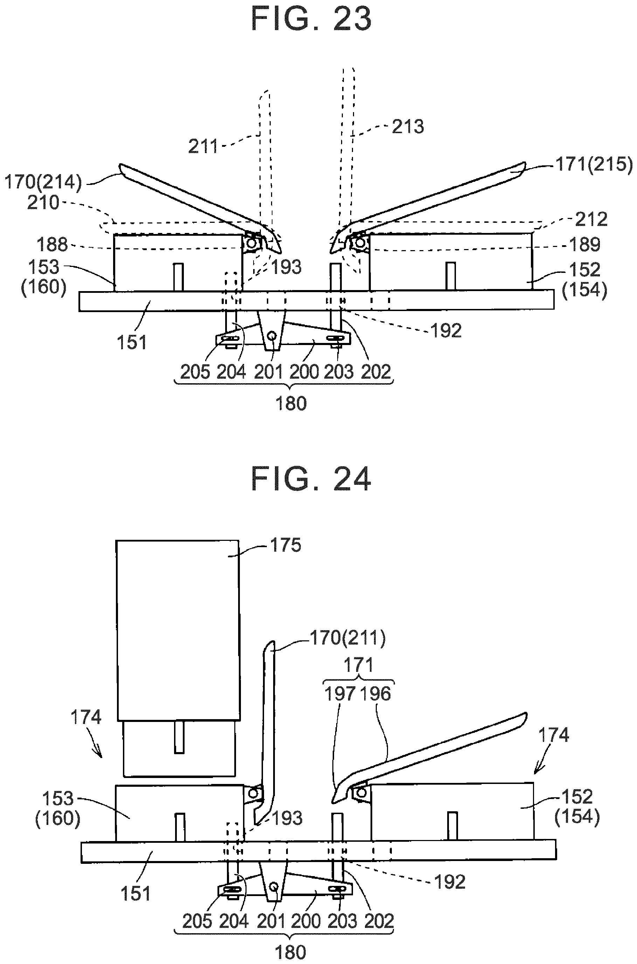

The pressing member 202 is positioned near the bent portion 197. FIG. 23 is a top view illustrating an opened/closed state of each cover. As illustrated in FIG. 23, the cover 170 is provided on the side face of the guide wall 160 so that the cover 170 is movable between a closed position 210 at which the connecting portion 153 is closed and an open position 211 at which the connecting portion 153 is opened outside. When the cover 170 is positioned at the open position 211, the AC charging connector 175 can be connected to the connecting portion 153. The elastic member 188 applies a biasing force to the cover 170 so that the cover 170 is placed at an initial position 214, and the initial position 214 is placed between the closed position 210 and the open position 211. Note that it is preferable that the initial position 214 be closer to the closed position 210 than the open position 211 between the closed position 210 and the open position 211.

The cover 171 is provided on the side face of the guide wall 154 so that the cover 171 is movable between a closed position 212 at which the connecting portion 152 is closed and an open position 213 at which the connecting portion 152 is opened outside. When the cover 171 is positioned at the open position 213, the DC charging connector 176 can be connected to the connecting portion 152. The elastic member 189 applies a biasing force to the cover 171 so that the cover 171 is positioned at an initial position 215.

The initial position 215 is positioned between the closed position 212 and the open position 213. Note that it is preferable that the initial position 215 be closer to the closed position 212 than the open position 213.

The following describes a case where the AC charging connector 175 or the DC charging connector 176 is connected to the charging connector connecting device 150 configured as described above.

As illustrated in FIG. 24, at the time when the AC charging connector 175 is connected, the cover 170 positioned at the initial position 214 is first pushed to be opened by the AC charging connector 175. Then, the cover 170 is positioned at the open position 211.

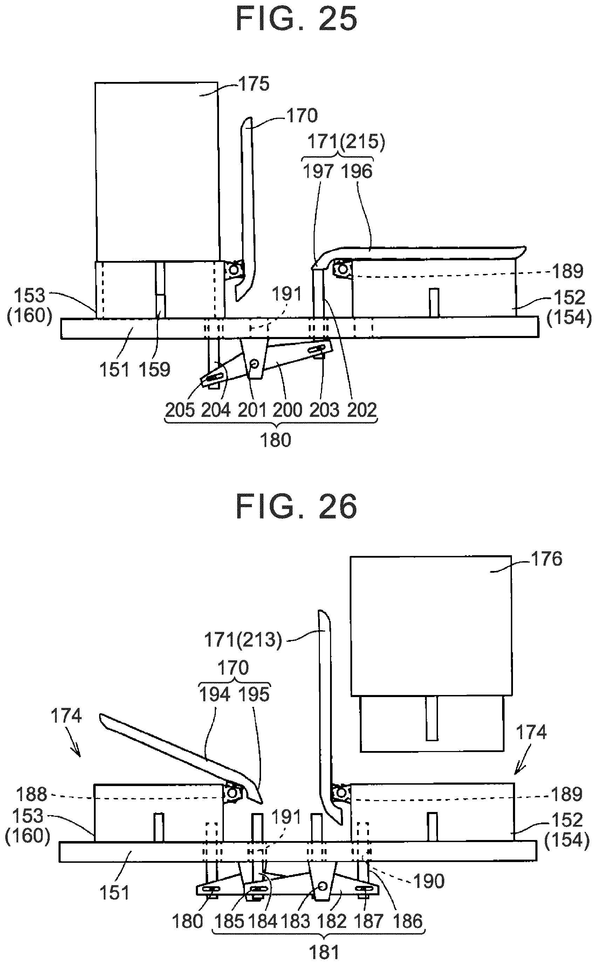

Subsequently, as illustrated in FIG. 25, the AC charging connector 175 is inserted into the connecting portion 153. When the AC charging connector 175 is inserted into the connecting portion 153, the ejection pin 204 is pushed by the AC charging connector 175. When the ejection pin 204 is pushed, the arm 200 rotates, so that the pressing member 202 projects. More specifically, the pressing member 202 projects toward a front-face side from a back-face side of the substrate 151. When the pressing member 202 projects as such, an end portion of the pressing member 202 makes contact with an end portion of the cover 171.

Along with the insertion of the AC charging connector 175, the pressing member 202 presses the cover 171. When the AC charging connector 175 is connected to the connecting portion 153, the cover 171 is positioned at the closed position 212. Note that the AC charging connector 175 is connected to the connecting portion 153 such that a claw portion provided in the AC charging connector 175 is locked by the stopper 159.

As such, when the AC charging connector 175 is connected to the connecting portion 153, the connecting portion 152 is closed by the cover 171. Hereby, at the time when the AC charging connector 175 is connected, it is possible to restrain the DC charging connector 176 from being connected.

Further, in a state where the AC charging connector 175 is connected to the connecting portion 153, the pressing member 202 supports the cover 171 so that the cover 171 is kept positioned at the closed position 212.

Even if an external force is applied to the cover 171, the pressing member 202 is supported by the AC charging connector 175 via the arm 200 and the ejection pin 204. Since the AC charging connector 175 is connected such that the claw portion of the AC charging connector 175 is locked by the stopper 159, even if an external force is applied to the cover 171, the AC charging connector 175 is restrained from falling off from the connecting portion 153.

On this account, in a state where the AC charging connector 175 is connected to the connecting portion 153, even if an external force is applied to the cover 171, it is possible to restrain the cover 171 from being opened.

Next will be described a case where the DC charging connector 176 is connected to the connecting portion 152. Initially, as illustrated in FIG. 26, the cover 171 is pushed to be opened by the DC charging connector 176, so as to rotate the cover 171 to the open position 213.

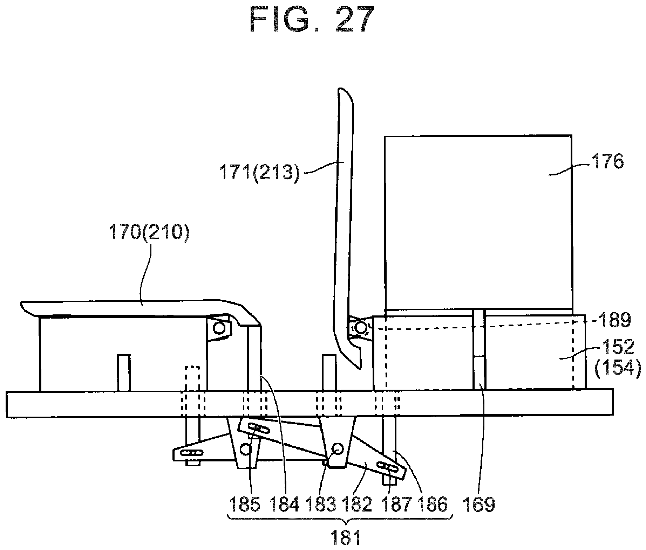

Subsequently, as illustrated in FIG. 27, the DC charging connector 176 is inserted into the connecting portion 152. When the DC charging connector 176 is inserted into the connecting portion 152, the DC charging connector 176 presses the ejection pin 186. When the ejection pin 186 is pressed, the arm portion 182 rotates. When the arm portion 182 rotates, the pressing member 184 projects in a direction toward the front-face side from the back-face side of the substrate 151, so as to press an end portion of the cover 170.

Then, along with the insertion of the DC charging connector 176, the pressing member 184 moves the cover 170 toward the closed position 210. As illustrated in FIG. 27, when the DC charging connector 176 is connected to the connecting portion 152, the cover 170 is positioned at the closed position 210. Note that the DC charging connector 176 is connected to the connecting portion 152 such that a claw portion provided in the DC charging connector 176 is locked by the stopper 169.

Here, in a state where the DC charging connector 176 is connected to the connecting portion 152, the pressing member 184 presses the cover 170 so that the cover 170 is kept positioned at the closed position 210. In a state where the DC charging connector 176 is connected to the connecting portion 152, even if an external force is applied to the cover 170, it is possible to restrain the cover 170 from being opened.

More specifically, the pressing member 184 is supported by the DC charging connector 176 via the arm portion 182 and the ejection pin 186. Since the claw portion of the DC charging connector 176 is locked by the stopper 169, even if an external force is applied to the cover 170, the DC charging connector 176 is restrained from falling off from the connecting portion 152. Hereby, the state where the pressing member 184 presses the cover 170 is maintained, so that the cover 170 is kept positioned at the closed position 210.

As such, even with the charging connector connecting device 150 according to the Embodiment 2, in a state where each charging connector is connected to each connecting portion, it is possible to restrain such a situation that a cover for a connecting portion to which no charging connector is connected is opened.

As such, the present invention can be applied to a charging connector connecting device that can perform AC charging and DC charging of a combo system, and a charging connector connecting device that can perform AC charging and DC charging of a CHAdeMO system.

The embodiments based on the present invention have been described above, but what has been described herein is just an example in all respects and is not limitative. A technical scope of the present invention is shown by Claims, and intended to include all modifications made within the meaning and scope equivalent to Claims.

The present invention is applicable to a charging connector connecting device.

A charging connector connecting device includes a cover provided so as to be movable between a closed position at which a connecting portion is closed and an open position at which the connecting portion is opened so that a second charging connector is connectable to the connecting portion; an elastic member that applies a biasing force to the cover so that the cover is positioned at an initial position between the closed position and the open position; and a pressing member configured to move along with insertion of the first charging connector into the connecting portion so as to press the cover positioned at the initial position so that the cover is moved to the closed position.

## Claims

1. A charging connector connecting device comprising:
a connector connecting portion (35) including a first connecting portion and a second connecting portion, the connector connecting portion being configured such that either a first charging connector to be inserted into the first connecting portion or a second charging connector to be inserted into the first connecting portion and the second connecting portion can be connected thereto;
a cover (36) provided so as to be movable between a closed position at which the second connecting portion is closed and an open position at which the second connecting portion is opened so that the second charging connector is connectable to the first and the second connecting portions;
an elastic member (56) applying a biasing force to the cover so that the cover is positioned at an initial position between the closed position and the open position; and
a pressing member (75) configured to move along with insertion of the first charging connector into the connector connecting portion so as to press the cover positioned at the initial position so that the cover is moved to the closed position, wherein
upon connecting of the first charging connector to the first connecting portion, the pressing member supports the cover so that the cover is maintained at the closed position.

2. The charging connector connecting device according to claim 1, **characterized in that**
the pressing member that has moved along with insertion of the second charging connector and the cover positioned at the open position are positioned so as to be distanced from each other.

3. The charging connector connecting device according to claim 1 or 2, **characterized by** further comprising:
an arm portion provided on a back-face side of the connector connecting portion, the back-face side being on an opposite side to a front-face side thereof into which the first charging connector or the second charging connector is inserted;
a support portion configured to support the arm portion so that the arm portion can swing; and
a projecting portion provided in the arm portion so as to project from the arm portion such that the projection portion projects toward the front-face side from the back-face side of the connector connecting portion, wherein:
the pressing member is provided on an opposite side to the projecting portion across the support portion;
the projection portion is provided at a position where the projection portion is pressed by the first charging connector or the second charging connector to be inserted into the connector connecting portion;
the arm portion is configured to rotate upon pressing of the projection portion by the first charging connector or the second charging connector, so that the pressing member moves in a direction toward the front-face side from the back-face side; and
the pressing member is configured to move in the direction toward the front-face side from the back-face side so as to press the cover positioned at the initial position.

4. The charging connector connecting device according to any one of claims 1 to 3, **characterized in that**:
the cover is rotatably attached to a lower end side of the second connecting portion; and
the cover positioned at the initial position is in a state where its upper end is distanced from the second connecting portion.

5. The charging connector connecting device according to any one of claims 1 to 4, **characterized in that**
the cover includes support walls that support side faces of the second charging connector.

6. The charging connector connecting device according to claim 1, **characterized by** further comprising:
a detective portion configured to detect that the first charging connector or the second charging connector is being inserted into the connector connecting portion; and
an actuator configured to move the pressing member, wherein:
the connector connecting portion includes a front face into which the first charging connector or the second charging connector can be inserted, and a back face positioned on an opposite side to the front face; and
the actuator is configured to move the pressing member from the back-face side toward the front-face side upon inserting of the first charging connector or the second charging connector.

7. A charging connector connecting device comprising:
a connector connecting portion including a first connecting portion to which a first charging connector can be connected, and a second connecting portion to which a second charging connector can be connected;
a second connecting portion cover provided so as to be movable between a closed position at which the second connecting portion is closed and an open position at which the second connecting portion is opened so that the second charging connector is connectable to the second connecting portion;
a second cover elastic member applying a biasing force to the second connecting portion cover so that the second connecting portion cover is positioned at an initial position between the closed position and the open position; and
a second cover pressing member configured to move along with insertion of the first charging connector into the first connecting portion, so as to press the second connecting portion cover positioned at the initial position so that the second connecting portion cover is moved to the closed position, the second cover pressing member being configured such that, when the first charging connector is connected to the first connecting portion, the second cover pressing member supports the second connecting portion cover so that the second connecting portion cover positioned at the closed position is maintained at the closed position.

8. The charging connector connecting device according to claim 7, **characterized by** further comprising:
a first connecting portion cover provided so as to be movable between a closed position at which the first connecting portion is closed and an open position at which the first connecting portion is opened so that the first charging connector is connectable to the first connecting portion;
a first cover elastic member configured to apply a biasing force to the first connecting portion cover so that the first connecting portion cover is positioned at an initial position between the closed position of the first connecting portion cover and the open position of the first connecting portion cover; and
a first cover pressing member configured to move along with insertion of the second charging connector into the second connecting portion, so as to press the first connecting portion cover positioned at the open position of the first connecting portion cover so that the first connecting portion cover is moved to the closed position of the first connecting portion cover, wherein
when the second charging connector is connected to the second connecting portion, the first cover pressing member supports the first connecting portion cover so that the first connecting portion cover positioned at the closed position of the first connecting portion cover is maintained at the closed position of the first connecting portion cover.

## Patentansprüche

1. Ladesteckerverbindungsvorrichtung mit:
einem Steckerverbindungsabschnitt (35) mit einem ersten Verbindungsabschnitt und einem zweiten Verbindungsabschnitt, wobei der Steckerverbindungsabschnitt derart konfiguriert ist, dass entweder ein erster Ladestecker, der in den ersten Verbindungsabschnitt einzufügen ist, oder ein zweiter Ladestecker, der in den ersten Verbindungsabschnitt einzufügen ist, und der zweite Verbindungsabschnitt damit verbunden werden können;
einer Abdeckung (36), die so bereitgestellt ist, dass sie zwischen einer geschlossenen Position, an der der zweite Verbindungsabschnitt geschlossen ist, und einer offenen Position, an der der zweite Verbindungsabschnitt offen ist, so beweglich ist, dass der zweite Ladestecker mit den ersten und den zweiten Verbindungsabschnitten verbindbar ist;
einem elastischen Element (56), das eine Vorspannkraft so auf die Abdeckung aufbringt, dass die Abdeckung an einer Anfangsposition zwischen der geschlossenen Position und der offenen Position positioniert ist; und
einem drückenden Element (75), das konfiguriert ist, sich zusammen mit dem Einfügen des ersten Ladesteckers in den Steckerverbindungsabschnitt so zu bewegen, dass es die an der Anfangsposition positionierte Abdeckung so drückt, dass die Abdeckung zu der geschlossenen Position bewegt wird, wobei
aufgrund des Verbindens des ersten Ladesteckers mit dem ersten Verbindungsabschnitt das drückende Element der Abdeckung so lagert, dass die Abdeckung an der geschlossenen Position beibehalten bleibt.

2. Ladesteckerverbindungsvorrichtung nach Anspruch 1, **dadurch gekennzeichnet, dass**
das drückende Element, das sich zusammen mit dem Einfügen des zweiten Ladesteckers und der an der offenen Position positionierten Abdeckung bewegt hat, so positioniert sind, dass sie voneinander beabstandet sind.

3. Ladesteckerverbindungsvorrichtung nach Anspruch 1 oder 2, **gekennzeichnet durch** außerdem Umfassen von:
einem Armabschnitt, der an einer Rückenflächenseite des Steckerverbindungsabschnitts bereitgestellt ist, wobei die Rückflächenseite an einer gegenüberliegenden Seite einer Vorderflächenseite davon liegt, in die der erste Ladestecker oder der zweite Ladestecker eingefügt wird;
einem Stützabschnitt, der konfiguriert ist, den Armabschnitt so zu stützen, dass der Armabschnitt schwingen kann; und
einem vorspringenden Abschnitt, der in dem Armabschnitt so bereitgestellt ist, dass er von dem Armabschnitt derart vorspringt, dass der vorspringende Abschnitt zu der Vorderflächenseite von der Rückflächenseite des Steckerverbindungsabschnitts vorspringt, wobei:
das drückende Element über den Stützabschnitt an einer gegenüberliegenden Seite zu dem vorspringenden Abschnitt bereitgestellt ist;
der vorspringende Abschnitt an einer Position bereitgestellt ist, an der der vorspringende Abschnitt durch den ersten Ladestecker oder den zweiten Ladestecker gedrückt wird, die in den Steckerverbindungsabschnitt einzufügen sind;
der Armabschnitt konfiguriert ist, sich aufgrund eines Drückens des vorspringenden Abschnitts durch den ersten Ladestecker oder den zweiten Ladestecker zu drehen, sodass das drückende Element sich von der Rückflächenseite in eine Richtung zu der Vorderflächenseite bewegt; und
das drückende Element konfiguriert ist, sich von der Rückflächenseite in die Richtung zu der Vorderflächenseite zu bewegen, um die an der Anfangsposition positionierte Abdeckung zu drücken.

4. Ladesteckerverbindungsvorrichtung nach einem der Ansprüche 1 bis 3, **dadurch gekennzeichnet, dass**:
die Abdeckung drehbar an einer unteren Endseite des zweiten Verbindungsabschnitts angebracht ist; und
die an der Anfangsposition positionierte Abdeckung sich in einem Zustand befindet, an dem ihr oberes Ende von dem zweiten Verbindungsabschnitt beabstandet ist.

5. Ladesteckerverbindungsvorrichtung nach einem der Ansprüche 1 bis 4, **dadurch gekennzeichnet, dass**
die Abdeckung Stützwände hat, die Seitenflächen des zweiten Ladesteckers stützen.

6. Ladesteckerverbindungsvorrichtung nach Anspruch 1, **gekennzeichnet durch** außerdem Umfassen von:
einem erfassenden Abschnitt, der konfiguriert ist, zu erfassen, dass der erste Ladestecker oder der zweite Ladestecker in den Steckerverbindungsabschnitt eingefügt ist; und
einem Stellglied, das konfiguriert ist, das drückende Element zu bewegen, wobei:
der Steckerverbindungsabschnitt eine vordere Fläche hat, in die der erste Ladestecker oder der zweite Ladestecker eingefügt werden kann, und eine Rückfläche, die an einer gegenüberliegenden Seite zu der Vorderfläche positioniert ist, und
das Stellglied konfiguriert ist, das drückende Element aufgrund des Einfügens des ersten Ladesteckers oder des zweiten Ladesteckers von der Rückflächenseite zu der Vorderflächenseite zu bewegen.

7. Ladesteckerverbindungsvorrichtung mit:
einem Steckerverbindungsabschnitt mit einem ersten Verbindungsabschnitt, mit dem ein erster Ladestecker verbunden werden kann, und einem zweiten Verbindungsabschnitt, mit dem ein zweiter Ladestecker verbunden werden kann;
einer zweiten Verbindungsabschnittabdeckung, die so bereitgestellt ist, dass sie zwischen einer geschlossenen Position, an der der zweite Verbindungsabschnitt geschlossen ist, und einer offenen Position, an der der zweite Verbindungsabschnitt offen, so beweglich ist, dass der zweite Ladestecker mit dem zweiten Verbindungsabschnitt verbindbar ist;
einem zweiten elastischen Abdeckungselement, das eine Vorspannkraft auf die zweite Verbindungsabschnittabdeckung so aufbringt, dass die zweite Verbindungsabschnittabdeckung an einer Anfangsposition zwischen der geschlossenen Position und der offenen Position positioniert ist; und
einem zweiten Abdeckungsdrückelement, das konfiguriert ist, sich zusammen mit dem Einfügen des ersten Ladesteckers in dem zweiten Verbindungsabschnitt zu bewegen, um die zweite Verbindungsabschnittabdeckung, die an der Anfangsposition positioniert ist, so zu drücken, dass die zweite Verbindungsabschnittabdeckung zu der geschlossenen Position bewegt wird, wobei das zweite Abdeckungsdrückelement derart konfiguriert ist, dass, wenn der erste Ladestecker mit dem ersten Verbindungsabschnitt verbunden wird, das zweite Abdeckungsdrückelement die zweite Verbindungsabschnittabdeckung so stützt, dass die an der geschlossenen Position positionierte zweite Verbindungsabschnittabdeckung an der geschlossenen Position beibehalten bleibt.

8. Ladesteckerverbindungsvorrichtung nach Anspruch 7, **gekennzeichnet durch** das außerdem Umfassen von:
einer ersten Verbindungsabschnittabdeckung, die so bereitgestellt ist, dass sie zwischen einer geschlossenen Position, an der der erste Verbindungsabschnitt geschlossen ist, und einer offenen Position, an der der erste Verbindungsabschnitt offen ist, so beweglich ist, dass der erste Ladestecker mit dem ersten Verbindungsabschnitt verbindbar ist;
einem ersten elastischen Abdeckungselement, das konfiguriert ist, eine Vorspannkraft auf die erste Verbindungsabschnittabdeckung so aufzubringen, dass die erste Verbindungsabschnittabdeckung an einer Anfangsposition zwischen der geschlossenen Position der ersten Verbindungsabschnittabdeckung und der offenen Position der ersten Verbindungsabschnittabdeckung positioniert ist; und
einem ersten Abdeckungsdrückelement, das konfiguriert ist, sich zusammen mit dem Einfügen des zweiten Ladesteckers in den zweiten Verbindungsabschnitt zu bewegen, um die erste Verbindungabschnittabdeckung, die an der offenen Position der ersten Verbindungsabschnittabdeckung positioniert ist, so zu drücken, dass die erste Verbindungsabschnittabdeckung zu der geschlossenen Position der ersten Verbindungsabschnittabdeckung bewegt wird, wobei
wenn der zweite Ladestecker mit dem zweiten Verbindungsabschnitt verbunden ist, das erste Abdeckungsdrückelement die erste Verbindungsabschnittabdeckung so stützt, dass die an der geschlossenen Position positionierte erste Verbindungsabschnittabdeckung der ersten Verbindungsabschnittabdeckung an der geschlossenen Position der ersten Verbindungsabschnittabdeckung beibehalten bleibt.

## Revendications

1. Dispositif de connexion de connecteur de charge comprenant :
une partie de connexion de connecteur (35) comprenant une première partie de connexion et une deuxième partie de connexion, la partie de connexion de connecteur étant configurée de sorte que l'un ou l'autre d'un premier connecteur de charge à insérer dans la première partie de connexion et d'un deuxième connecteur de charge à insérer dans la première partie de connexion et la deuxième partie de connexion peut être connecté à celle-ci ;
un capot (36) prévu de manière à pouvoir être déplacé entre une position fermée, à laquelle la deuxième partie de connexion est fermée, et une position ouverte, à laquelle la deuxième partie de connexion est ouverte, de sorte que le deuxième connecteur de charge puisse être connecté aux première et deuxième parties de connexion ;
un élément élastique (56) appliquant une force de sollicitation au capot de sorte que le capot soit positionné à une position initiale entre la position fermée et la position ouverte ; et
un élément de pression (75) configuré pour se déplacer avec l'insertion du premier connecteur de charge dans la partie de connexion de connecteur de manière à presser le capot positionné à la position initiale de sorte que le capot soit déplacé vers la position fermée, dans lequel
lors de la connexion du premier connecteur de charge à la première partie de connexion, l'élément de pression supporte le capot de sorte que le capot soit maintenu à la position fermée.

2. Dispositif de connexion de connecteur de charge selon la revendication 1, **caractérisé en ce que**
l'élément de pression qui a été déplacé avec l'insertion du deuxième connecteur de charge et le capot positionné à la position ouverte sont positionnés de manière à être à distance l'un de l'autre.

3. Dispositif de connexion de connecteur de charge selon la revendication 1 ou 2, **caractérisé en ce qu'**il comprend en outre :
une partie de bras prévue sur un côté de face arrière de la partie de connexion de connecteur, le côté de face arrière étant d'un côté opposé à un côté de face avant de celle-ci, dans laquelle le premier connecteur de charge ou le deuxième connecteur de charge est inséré ;
une partie de support configurée pour supporter la partie de bras de sorte que la partie de bras puisse basculer ; et
une partie saillante prévue dans la partie de bras de manière à faire saillie de la partie de bras de sorte que la partie saillante fasse saillie vers le côté de face avant à partir du côté de face arrière de la partie de connexion de connecteur, dans lequel :
l'élément de pression est prévu sur un côté opposé à la partie saillante à travers la partie de support ;
la partie saillante est prévue à une position où la partie saillante est pressée par le premier connecteur de charge ou le deuxième connecteur de charge à insérer dans la partie de connexion de connecteur ;
la partie de bras est configurée pour tourner lors de la pression de la partie saillante par le premier connecteur de charge ou le deuxième connecteur de charge, de sorte que l'élément de pression se déplace dans une direction vers le côté de face avant à partir du côté de face arrière ; et
l'élément de pression est configuré pour se déplacer dans la direction vers le côté de face avant à partir du côté de face arrière de manière à presser le capot positionné à la position initiale.

4. Dispositif de connexion de connecteur de charge selon l'une quelconque des revendications 1 à 3, **caractérisé en ce que** :
le capot est fixé en rotation à un côté d'extrémité inférieure de la deuxième partie de connexion ; et
le capot positionné à la position initiale est dans un état dans lequel son extrémité supérieure est à distance de la deuxième partie de connexion.

5. Dispositif de connexion de connecteur de charge selon l'une quelconque des revendications 1 à 4, **caractérisé en ce que**
le capot comprend des parois de support qui supportent les faces latérales du deuxième connecteur de charge.

6. Dispositif de connexion de connecteur de charge selon la revendication 1, **caractérisé en ce qu'**il comprend en outre :
une partie de détection configurée pour détecter que le premier connecteur de charge ou le deuxième connecteur de charge est inséré dans la partie de connexion de connecteur ; et
un actionneur configuré pour déplacer l'élément de pression, dans lequel :
la partie de connexion de connecteur comprend une face avant dans laquelle le premier connecteur de charge ou le deuxième connecteur de charge peut être inséré, et une face arrière positionnée d'un côté opposé à la face avant ; et
l'actionneur est configuré pour déplacer l'élément de pression du côté de face arrière vers le côté de face avant lors de l'insertion du premier connecteur de charge ou du deuxième connecteur de charge.

7. Dispositif de connexion de connecteur de charge comprenant :
une partie de connexion de connecteur comprenant une première partie de connexion à laquelle un premier connecteur de charge peut être connecté, et une deuxième partie de connexion à laquelle un deuxième connecteur de charge peut être connecté ;
un deuxième capot de partie de connexion prévu de manière à pouvoir être déplacé entre une position fermée, à laquelle la deuxième partie de connexion est fermée, et une position ouverte, à laquelle la deuxième partie de connexion est ouverte, de sorte que le deuxième connecteur de charge puisse être connecté à la deuxième partie de connexion ;
un deuxième élément élastique de capot appliquant une force de sollicitation au deuxième capot de partie de connexion de sorte que le deuxième capot de partie de connexion soit positionné à une position initiale entre la position fermée et la position ouverte ; et
un deuxième élément de pression de capot configuré pour se déplacer avec l'insertion du premier connecteur de charge dans la première partie de connexion, de manière à presser le deuxième capot de partie de connexion positionné à la position initiale de sorte que le deuxième capot de partie de connexion soit déplacé vers la position fermée, le deuxième élément de pression de capot étant configuré de sorte que, lorsque le premier connecteur de charge est connecté à la première partie de connexion, le deuxième élément de pression de capot supporte le deuxième capot de partie de connexion de sorte que le deuxième capot de partie de connexion positionné à la position fermée soit maintenu à la position fermée.

8. Dispositif de connexion de connecteur de charge selon la revendication 7, **caractérisé en ce qu'**il comprend en outre :
un premier capot de partie de connexion prévu de manière à pouvoir être déplacé entre une position fermée, à laquelle la première partie de connexion est fermée, et une position ouverte, à laquelle la première partie de connexion est ouverte, de sorte que le premier connecteur de charge puisse être connecté à la première partie de connexion ;
un premier élément élastique de capot configuré pour appliquer une force de sollicitation au premier capot de partie de connexion de sorte que le premier capot de partie de connexion soit positionné à une position initiale entre la position fermée du premier capot de partie de connexion et la position ouverte du premier capot de partie de connexion ; et
un premier élément de pression de capot configuré pour se déplacer avec l'insertion du deuxième connecteur de charge dans la deuxième partie de connexion, de manière à presser le premier capot de partie de connexion positionné à la position ouverte du premier capot de partie de connexion de sorte que le premier capot de partie de connexion soit déplacé vers la position fermée du premier capot de partie de connexion, dans lequel
lorsque le deuxième connecteur de charge est connecté à la deuxième partie de connexion, le premier élément de pression de capot supporte le premier capot de partie de connexion de sorte que le premier capot de partie de connexion positionné à la position fermée du premier capot de partie de connexion soit maintenu à la position fermée du premier capot de partie de connexion.
